# EUROPÄISCHE PATENTSCHRIFT

(11) **EP 3 080 021 B1**
(45) Veröffentlichungstag und Bekanntmachung des Hinweises auf die Patenterteilung: **27.09.2017**
(21) Anmeldenummer: 14815281.2
(22) Anmeldetag: 09.12.2014
(51) Int. Cl.: B65G 67/08

(54) **VORRICHTUNG UND VERFAHREN ZUM HANDHABEN VON GEGENSTÄNDEN**
DEVICE AND METHOD FOR HANDLING OBJECTS
DISPOSITIF ET PROCÉDÉ PERMETTANT DE MANIPULER DES OBJETS

(30) Priorität: 13.12.2013 DE 102013225927
(43) Veröffentlichungstag der Anmeldung: 19.10.2016
(73) Patentinhaber: Siemens Aktiengesellschaft, 80333 München (DE)
(72) Erfinder: ENENKEL, Peter, 78462 Konstanz (DE)
(74) Vertreter: Maier, Daniel Oliver
(86) Internationale Anmeldenummer: PCT/EP2014/076974
(87) Internationale Veröffentlichungsnummer: WO 2015/086559

(56) Entgegenhaltungen:
- EP-A2- 0 615 925
- DE-U1-202010 012 374

## Beschreibung

Die Erfindung betrifft eine Vorrichtung zum Handhaben von Gegenständen, mit einem Abladekopf, auf den die Gegenstände transportierbar und von dem die Gegenstände von einem Bediener abladbar sind, einem mit dem Abladekopf verbundenen Hubmittel, mittels dem die Höhe des Abladekopfes einstellbar ist, und einer auslösbaren Sensoreinrichtung, durch die das Hubmittel aktivierbar ist.

Die Erfindung betrifft weiterhin ein Verfahren zum Handhaben von Gegenständen, bei dem die Gegenstände von einem Bediener von einem Abladekopf abgeladen werden, eine Sensoreinrichtung ausgelöst und dadurch der Abladekopf durch ein Hubmittel höhenverstellt wird.

Vorrichtungen und Verfahren der oben genannten Art sind im Stand der Technik bekannt und werden beispielsweise zum Beladen von Transportbehältern, Flugzeugen oder Lagereinrichtungen verwendet. Dabei wird der Abladekopf so positioniert, dass ein ergonomisches und einfaches Abladen der Gegenstände durch den Bediener möglich ist.

In der WO 2005/092706 A1 ist beispielsweise eine solche Vorrichtung beschrieben. Weitere Vorrichtungen zum Handhaben von Gegenständen sind aus der WO 98/54073, WO 2006/17003 A1 und DE 10 2008 136 721 A1 bekannt. EP0615925A2 offenbart eine Vorrichtung mit den Merkmalen des Oberbegriffs des Anspruchs 1. In modernen Logistikzentren oder Flughäfen müssen immer größere Anzahlen von Gegenständen, wie beispielsweise Gepäckstücke, Pakete oder andere Stückgüter, in immer kürzerer Zeit be- und entladen werden. Daher ist es bei der eingangs genannten Vorrichtung und dem Verfahren wünschenswert, dass der Durchsatz an umgeschlagenen Gegenständen pro Zeit gesteigert wird.

Daher liegt der vorliegenden Erfindung die Aufgabe zugrunde, die oben genannte Vorrichtung und das oben genannte Verfahren so zu verbessern, dass der Durchsatz von Gegenständen gesteigert werden kann.

Für die oben genannte Vorrichtung wird die Aufgabe von der vorliegenden Erfindung dadurch gelöst, dass die Sensoreinrichtung so angeordnet ist, dass sie von dem Bediener mittels eines auf dem Abladekopf befindlichen Stückgutes auslösbar ist.

Für das oben genannte Verfahren wird die Aufgabe erfindungsgemäß dadurch gelöst, dass die Sensoreinrichtung vom Bediener mittels eines auf dem Abladekopf befindlichen Gegenstandes ausgelöst wird.

Die Erfindung hat den Vorteil, dass das Höhenverstellen des Abladekopfes vom Bediener mit gegriffenem Gegenstand ausgelöst werden kann und so eine sehr schnelle Positionierung des Abladekopfes möglich ist. Ein Positionieren des Abladekopfes durch den Bediener bevor er den Gegenstand greift erübrigt sich, so dass die Erfindung die Arbeitsschritte Positionieren des Abladekopfes, Greifen und Bewegen des auf dem Abladekopf befindlichen Gegenstandes zusammenfasst. Während dieser Schritte sind insbesondere schwere Gegenstände zumindest überwiegend vom Abladekopf gestützt, so dass keine körperliche Belastung für den Bediener auftritt.

Die Erfindung kann durch verschiedene vorteilhafte Ausgestaltungen weiterentwickelt werden, die im Folgenden beschrieben werden und beliebig miteinander kombinierbar sind.

So kann die Vorrichtung ein mit dem Abladekopf verbundenes Transportmittel aufweisen, durch das die Güter in einer Transportrichtung zum Abladekopf bewegbar sind. Dies hat den Vorteil, dass ein zügiger Transport von Gegenständen zum Abladekopf gewährleistet ist. Geeignete Transportmittel können beispielsweise Förderbänder, Rollenbänder oder Rutschen sein. Um insbesondere den hohen Anforderungen der Paketlogistik standzuhalten, kann die Vorrichtung zum Beladen der Gegenstände in einen Transportbehälter ausgebildet sein und der Abladekopf in der Transportrichtung an das Transportmittel anschließend angeordnet sein. Transportbehälter können beispielsweise Wechselbrücken, Container oder LKW-Laderäume sein. Durch den in der Transportrichtung an das Transportmittel anschließende Abladekopf kann die Vorrichtung besonders gut in den Transportbehälter hineingeschoben werden, was das Beladen für den Bediener vereinfacht.

In einer vorteilhaften Ausgestaltung kann die Sensoreinrichtung in Transportrichtung hinter dem Abladekopf und/oder quer zur Transportrichtung seitlich vom Abladekopf angeordnet sein. Dies hat den Vorteil, dass die Sensoreinrichtung ausgelöst wird, wenn der Bediener den Gegenstand über den Abladekopf hinausragen lässt und so den Abladevorgang einleitet. Dabei kann die Sensoreinrichtung unmittelbar an den Abladekopf angrenzen, um ein schnelles Auslösen und ein schnelles Positionieren sicherzustellen.

Um die Sensoreinrichtung möglichst verschleißsicher und widerstandslos auslösbar auszubilden, kann die Sensoreinrichtung als eine Kamera oder eine Lichtschranke ausgebildet sein. Alternativ kann die Sensoreinrichtung als ein Schalter ausgebildet sein. Dies hat den Vorteil, dass Schalter, wie beispielsweise Drucktaster, Näherungsschalter, Mikroschalter oder Seilzugschalter besonders kostengünstig verfügbar sind und die Herstellkosten der Vorrichtung gering halten.

Um das Auslösen der Sensoreinrichtung durch eine Kippbewegung des Gegenstandes am Rand des Abladekopfes zu ermöglichen, kann der Abladekopf eine Auflageebene für die Güter definieren und die Sensoreinrichtung in gleicher Höhe oder unterhalb der Auflageebene angeordnet sein. Eine Kippbewegung ist insbesondere bei schweren Gegenständen für das Auslösen der Sensoreinrichtung und damit dem Höhenverstellen des Abladekopfes ergonomisch geeignet, weil ein unbeabsichtigtes Auslösen vermieden werden kann und dennoch eine Stützung des Gegenstandes und Entlastung des Bedieners gewährleistet ist.

Ferner kann die Sensoreinrichtung so ausgebildet sein, dass sie mittels einer auf sie wirkenden Betätigungskraft auslösbar ist. Dies hat den Vorteil, dass der Bediener mit dem Gegenstand die Betätigungskraft, die beispielsweise von oben wirken kann, bewusst aufbringen muss, um das Auslösen der Sensoreinrichtung zu bewirken. Somit ist eine bewusste Handlung des Bedieners nötig und ein versehentliches Auslösen der Sensoreinrichtung kann ausgeschlossen werden.

In einer weiteren vorteilhaften Ausgestaltung kann der Abladekopf eine Auflageebene für die Güter definieren, und eine Kante aufweisen, welche die Auflageebene in Transportrichtung und/oder quer zur Transportrichtung begrenzt, wobei die Sensoreinrichtung in zumindest einen Teil der Kante integriert ist oder zumindest einen Teil der Kante ausbildet. Dies hat den Vorteil, dass die Sensoreinrichtung in den Abladekopf integriert ist und dadurch eine kompakte Einheit ausbildet und das Auslösen der Sensoreinrichtung über das Kippen des Gegenstandes über die entstandene Sensorkante ausgelöst wird.

Um die Gegenstände nacheinander zum Abladekopf zu befördern, kann die Vorrichtung eine Vereinzelungseinrichtung aufweisen, welche die Gegenstände in der Transportrichtung vereinzelt.

Ferner kann die Vorrichtung eine Waage, die zur Gewichtsmessung der Gegenstände ausgebildet ist, und ein Signalmittel, das zum Abgeben eines für den Bediener wahrnehmbaren Signals für jeden Gegenstand, dessen von der Waage gemessenes Gewicht oberhalb eines vorbestimmten Grenzwertes liegt, ausgestaltet sein. Dies hat den Vorteil, dass der Bediener über schwere Gegenstände durch das Signalmittel informiert ist und nur mit diesen schweren Gegenständen die Sensoreinrichtung auslöst, um die Höhe des Abladekopfes zu optimieren. Leichte Gegenstände können ohne Absenken des Abladekopfes abgeladen werden.

Um den Beladeablauf stärker zu automatisieren, kann die Vorrichtung eine Steuerung aufweisen, die mit der Sensoreinrichtung und dem Hubmittel signaltechnisch verbunden ist, und die bei Auslösung der Sensoreinrichtung zum automatischen Verfahren des Abladekopfes von einer hohen Stellung in eine niedrige Stellung ausgebildet ist. Dabei kann die hohe Stellung eine ergonomisch optimale Höhe zum Bewegen von Gegenständen auf dem Abladekopf sein und die niedrige Stellung eine geeignete Höhe über der Standfläche des Bedieners haben, die ein Herunterrollen von schweren Gegenständen ermöglicht. Bei diesem Herunterrollen von schweren Gegenständen braucht der Bediener die Gegenstände nicht zu heben, sondern sie werden zunächst vom Abladekopf gestützt und gleiten davon in der niedrigen Stellung auf beispielsweise den Boden des Transportbehälters.

Ferner kann die Steuerung ausgebildet sein, nach Auslösung der Sensoreinrichtung den Abladekopf von der niedrigen Stellung zurück in die hohe Stellung zu verfahren. So wird der Abladekopf automatisch zurück in seine Ausgangsposition - die hohe Stellung - verfahren, nachdem die Sensoreinrichtung nicht mehr vom Gegenstand ausgelöst ist und der Bediener den schweren Gegenstand im Transportbehälter anordnet. Da die Gegenstände üblicherweise im Mix, also schwere und leichte Gegenstände gemischt, auf den Abladekopf gefördert werden, wird durch das automatische Zurückfahren in die Ausgangsstellung eine Durchsatzsteigerung erreicht.

Um die Handhabung der Gegenstände mit der erfindungsgemäßen Vorrichtung weiter zu optimieren, kann die Vorrichtung einen am Abladekopf angeordneten Speicherbereich aufweisen, der zum Zwischenlagern von mehreren Gegenständen ausgebildet ist. Hier können insbesondere kleine, leichte Gegenstände zwischengelagert werden, die anschließend gruppiert besonders schnell vom Bediener abgeladen werden können.

Im Folgenden wird die Erfindung mit Bezug auf die beispielhaften Ausführungsformen in den beigefügten Zeichnungen erläutert.

Es zeigen:
- Figur 1: eine schematische Darstellung einer beispielhaften Ausführungsform der erfindungsgemäßen Vorrichtung in einer Seitenansicht;
- Figur 2: eine schematische Darstellung der erfindungsgemäßen Vorrichtung aus Figur 1 in einer perspektivischen Ansicht;
- Figur 3: die Vorrichtung aus Figur 1 in einer anderen Stellung;
- Figur 4-6: jeweils eine schematische Darstellung unterschiedlicher Ausgestaltungen der erfindungsgemäßen Vorrichtung mit Sensoreinrichtung;
- Figur 7: eine schematische Darstellung einer weiteren Ausführungsform der erfindungsgemäßen Vorrichtung.

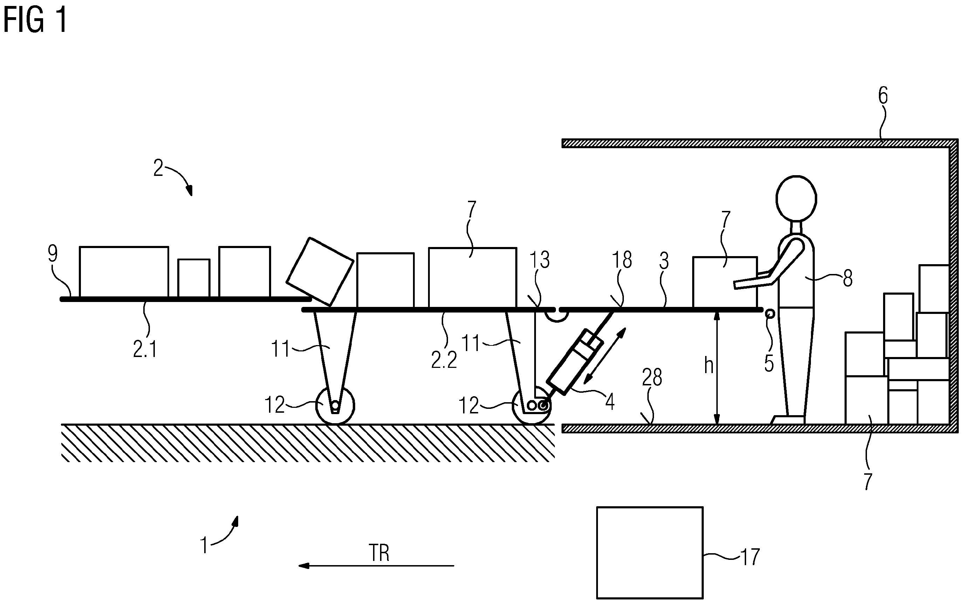

Die erfindungsgemäße Vorrichtung wird mit Bezug auf die beispielhafte Ausführungsform der Figuren 1 bis 4 beschrieben. In unterschiedlichen Ausführungsformen werden gleiche Teile der Einfachheit halber mit gleichen Bezugszeichen bezeichnet.

Die Vorrichtung 1 umfasst ein Transportmittel 2, einen Abladekopf 3, ein Hubmittel 4, eine Sensoreinrichtung 5 und eine Steuerung 17. Die Vorrichtung 1 ist in den Figuren 1 bis 3 beispielhaft teilweise in einem Transportbehälter 6 angeordnet und wird zur Handhabung von Gegenständen 7 durch einen Bediener 8 verwendet.

Das Transportmittel 2 ist in der beispielhaften Ausführungsform der Figuren 1 bis 4 als ein im Wesentlichen waagerecht verlaufendes Förderband ausgebildet. Das Transportmittel 2 weist einen ersten Teil 2.1 und einen zweiten Teil 2.2 auf, die teleskopartig gegeneinander verschiebbar sind und durch die das Transportmittel 2 in einer Transportrichtung TR verkürzt oder verlängert werden kann. Das Transportmittel 2 bildet eine Transportebene 9 aus, auf der in den Figuren 1 bis 3 die Gegenstände 7 angeordnet sind. Das Transportmittel 2 umfasst ferner einen Antrieb (nicht dargestellt), durch den die auf der Transportebene 9 befindlichen Gegenstände 7 in der Transportrichtung TR transportierbar sind. Unterhalb der Transportebene 9 weist das Transportmittel 2 ein Fahrgestell 10 auf, das Stützen 11 und an den Stützen 11 angeordnete Räder 12 umfasst.

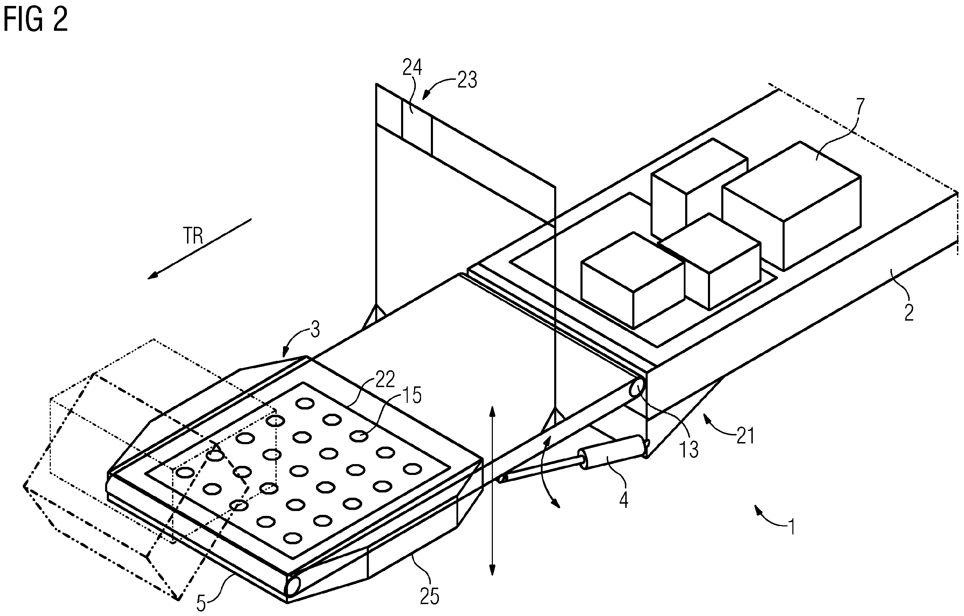

In der Transportrichtung TR schließt sich an das Transportmittel 2 der Abladekopf 3 an. Der Abladekopf 3 ist über ein Gelenk 13 mit dem Transportmittel 2 verbunden. Dadurch ist der Abladekopf 3 gegenüber dem Transportmittel 2 schwenkbar ausgebildet, so dass die Höhe h eines freien Endes 14 des Abladekopfes 3 einstellbar ist. Der Abladekopf 3 umfasst in der Ausführungsform in Figur 2 mehrere gelagerte Kugeln 15, die mit einem Abstand zueinander in der Oberfläche des Abladekopfes 3 angeordnet sind. Die Kugeln 15 sind dabei wie bei einem Kugeltisch ausgestaltet und angeordnet. Alternativ kann der Abladekopf auch ohne Kugeln 15 mit einer Gleitfläche oder mit horizontal verlaufenden Rollen oder Bändern ausgebildet sein.

Das Hubmittel 4 ist bei der Ausführungsform der Figuren 1 bis 4 zwischen dem Transportmittel 2 und dem Abladekopf 3 angeordnet und umfasst einen Hydraulik- oder Pneumatikzylinder 16. Das Hubmittel 4 ist signaltechnisch mit der Steuerung 17 verbunden, die das Hubmittel 4 zum Verändern der Lage des Abladekopfes 3 ansteuert. Alternativ kann das Hubmittel 4 beispielsweise auch einen Spindelantrieb, einen Zahnstangenantrieb oder ähnliches umfassen.

Der Abladekopf 3 definiert eine Auflageebene 18 für die Gegenstände 7.

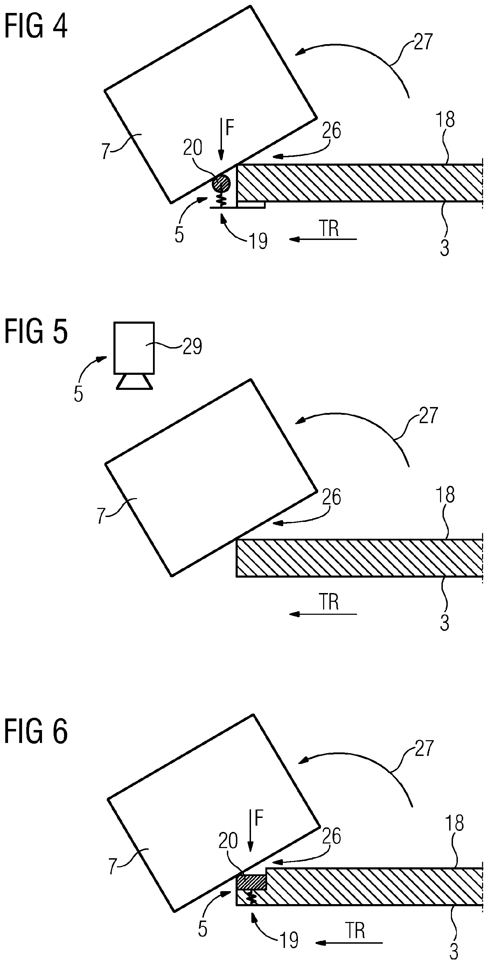

Die Sensoreinrichtung 5 ist bei der Ausführungsform der Figuren 1 bis 4 in der Transportrichtung TR direkt hinter und seitlich vom Abladekopf 3 angeordnet. Die Sensoreinrichtung 5 umfasst beispielsweise einen Druckschalter 19 und eine mit dem Schalter 19 verbundene Schaltwalze 20, die parallel und mit einem Abstand unterhalb der Auflageebene 18 verläuft. Die Sensoreinrichtung 5 der Ausführungsform der Fig. 1 - 3 ist im Detail in Fig. 4 gezeigt. Die Schaltwalze 20 ist beispielsweise etwas 5 mm unterhalb der Auflageebene 18 angeordnet. Die Sensoreinrichtung 5 in Figur 4 ist durch eine von oben wirkende Druckkraft F betätigbar.

Die Vorrichtung 1 umfasst ferner eine Vereinzelungseinrichtung 21, die im Bereich zwischen dem Transportmittel 2 und dem Abladekopf 3 ausgebildet ist. Die Vereinzelungseinrichtung 21 wird im Wesentlichen durch die Steuerung 17 des Transportmittels 2 ausgebildet, wie im Folgenden noch näher beschrieben wird. Der Abladekopf 3 umfasst weiterhin eine Waage 22, durch die das Gewicht bzw. die Gewichtskraft eines auf dem Abladekopf 3 befindlichen Gegenstandes 7 ermittelt werden kann. Alternativ kann die Waage 22 auch Teil des Transportmittels 2 sein. Die Vorrichtung 1 umfasst ferner ein über dem Abladekopf 3 angeordnetes Signalmittel 23, das beispielsweise eine rote Signalleuchte 24 aufweist.

Bei der Ausführungsform der Figuren 1 bis 3 ist an der einen Seite des Abladekopfes 3 ein Speicherbereich 25 angeordnet. Der Speicherbereich 25 ist kastenförmig ausgebildet und ein Boden des Speicherbereichs 25 ist so angeordnet, dass er mit der Auflageebene 18 des Abladekopfes 3 fluchtet. Alternativ oder zusätzlich kann ein weiterer Speicherbereich 25 auch oberhalb vom Abladekopf 3 im Bereich des Signalmittels 23 angeordnet sein.

Im Folgenden wird die Funktion der erfindungsgemäßen Vorrichtung 1 beim Beladen des Transportbehälters 6 mit den Gegenständen 7 durch den Bediener 8 beschrieben.

Zunächst wird die Vorrichtung 1 vom Bediener 8 so positioniert, dass deren Ende in den Transportbehälter 6 ragt, um Gegenstände 7 in dem Transportbehälter 6 zu stapeln.

Wenn der Beladevorgang startet, werden die Gegenstände 7, die in den Transportbehälter 6 beladen werden sollen, auf dem Transportmittel 2 in der Transportrichtung TR bewegt. Beispielsweise werden die Gegenstände 7 von einer nicht dargestellten Sortiereinrichtung auf das Transportmittel 2 ausgeschleust. Das Transportmittel 2 und dessen Räder 12 können dabei sowohl innerhalb als auch außerhalb des Transportbehälters 6 angeordnet sein. Der Antrieb (nicht dargestellt) des Transportmittels 2 wird über die Steuerung 17 angesteuert und zur Vereinzelung stoppt die Steuerung 17 das Transportmittel 2 so, dass immer nur ein Gegenstand 7 auf den Abladekopf 3 gelangt. Am Transportmittel 2 können Lichtschranken oder ähnliche Sensoren angeordnet sein, um eine optimale Positionierung der Gegenstände 7 zu gewährleisten.

Der vereinzelte Gegenstand 7, der vom Transportmittel 2 auf den Abladekopf 3 gelangt, wird dem Bediener 8 zum Abladen bereitgestellt. Dabei können die Kugeln 15 auf dem Abladekopf 3 angetrieben oder nicht angetrieben sein. Auf dem Abladekopf 3 wird durch die Waage 22 das Gewicht des Gegenstandes 7 gemessen und an die Steuerung 17 übermittelt. Übersteigt das Gewicht des Gegenstandes, das die Waage 22 ermittelt hat, einen vorbestimmten und in der Steuerung 17 abgelegten Grenzwert (im Folgenden schwerer Gegenstand genannt), aktiviert die Steuerung 17 anschließend die rote Lampe 24 des Signalmittels 23. Hierdurch wird dem Bediener angezeigt, dass der als nächstes abzuladende Gegenstand 7 ein schwerer Gegenstand ist. Alternativ oder zusätzlich zur roten Lampe 24 könnte das Signalmittels 23 ebensogut einen Lautsprecher aufweisen, der ein akustisches Signal abgibt, dass ebenfalls vom Bediener 8 wahrnehmbar ist und ihm einen schweren Gegenstand anzeigt.

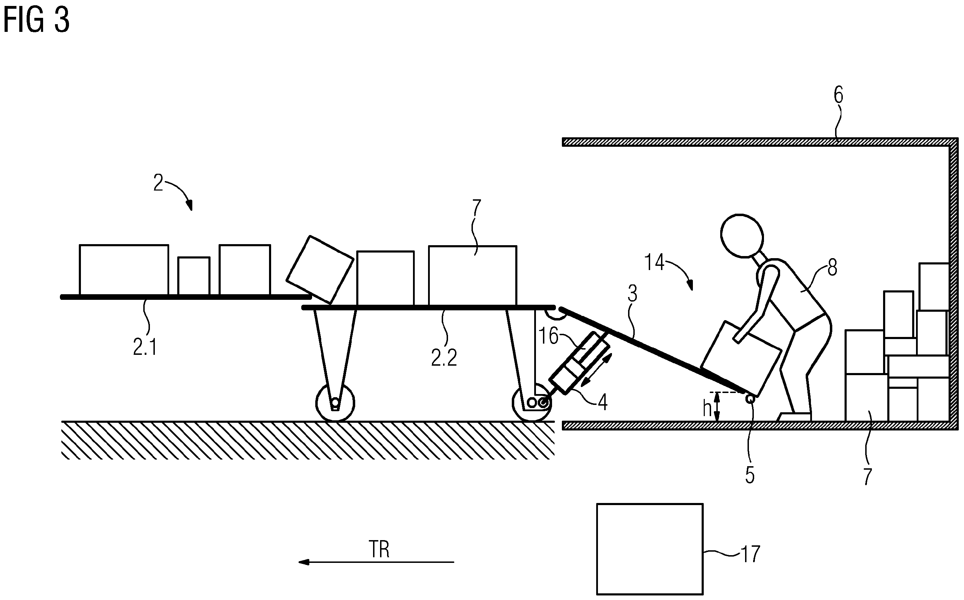

Wie in den Figuren 1 bis 4 dargestellt, greift der Bediener 8 den Gegenstand 7 und bewegt ihn, während der Gegenstand 7 auf dem Abladekopf 3 abgestützt ist, in Richtung der Kante 26 des Abladekopfes 3 und der Sensoreinrichtung 5. Durch eine vom Bediener 8 provozierte Kippbewegung 27 kippt der Gegenstand 7 auf der Kante 26 und betätigt dadurch die Schaltwalze 20 und den Schalter 19 und löst dadurch die Sensoreinrichtung 5 aus. Während des Auslösens der Sensoreinrichtung 5 stützt der Abladekopf 3 weiterhin das Gewicht des Gegenstandes 7 ab, so dass keine oder kaum eine Kraft vom Bediener 8 aufgebracht werden muss. Durch das an die Steuerung 17 übermittelte Auslösen der Sensoreinrichtung 5 aktiviert die Steuerung 17 das Hubmittel 4, das anschließend die Höhe h des Abladekopfes 3 verändert. Bei der Ausführungsform der Figuren 1 bis 4 ist hierunter zu verstehen, dass das freie Ende 14 des Abladekopfes 3 von dem Hubmittel von der in Figur 1 dargestellten hohe Stellung in die in Figur 3 dargestellte niedrige Stellung bewegt wird. Dabei verringert sich die Höhe h zwischen dem freien Ende 14 des Abladekopfes 3 und einer Arbeitsfläche 28, auf der der Bediener 8 steht. Bei der Ausführungsform der Figuren 1 bis 4 ist diese Arbeitsfläche 28, die eine Arbeitsplattform darstellt, der Boden des Transportbehälters 6. In der in Figur 3 dargestellten niedrigen Stellung des Abladekopfes 3 kann der Gegenstand 7 vom Bediener 8 leicht und ohne Kraft abgeladen werden, indem er durch eine weitere Kippbewegung 27 vom Abladekopf 3 gerollt wird. Anschließend schiebt der Bediener 8 den schweren Gegenstand 7 in eine geeignete Position im Transportbehälter 6. Um diese Positionierung weiter zu unterstützten, kann der Abladekopf 3 oder die gesamte Vorrichtung 1 auch zu den Seiten schwenkbar ausgebildet sein.

Ein Gegenstand 7, dessen von der Waage 22 gemessenes Gewicht den Grenzwert nicht überschreitet, wird von der Vorrichtung 1 folgendermaßen behandelt.

Der Gegenstand 7, dessen Gewicht den Grenzwert nicht überschreitet (im Folgenden leichter Gegenstand genannt), wird von der Steuerung 17 genau wie ein schwerer Gegenstand vereinzelt auf dem Ablagekopf 3 gefördert. Allerdings wird die rote Lampe 24 nicht aktiviert, weil der Gegenstand 7 kein schwerer Gegenstand ist. Entweder wird das Signalmittel 23 bei leichten Gegenständen gar nicht aktiviert oder es gibt eine zusätzliche beispielsweise grüne Lampe (nicht dargestellt), die dem Bediener 8 einen leichten Gegenstand signalisiert. Da der Bediener 8 den leichten Gegenstand ohne Mühe manuell vom Abladekopf 3 in der hohen Stellung in Figur 1 abladen und im Transportbehälter 6 stapeln kann, wird er die Sensoreinrichtung 5 nicht auslösen und dadurch den Abladekopf 3 in der hohen Stellung belassen. Hierdurch können leichte Gegenstände 7 schnell abgeladen werden, ohne dass ein Verfahren des Hubmittels 4 nötig ist. Der Bediener 8 hat die Möglichkeit, kleine leichte Gegenstände 7 in dem Speicherbereich 25 zu sammeln und zu einem späteren Zeitpunkt abzuladen. Dies hat den Vorteil, dass kleine leichte Gegenstände 7 gesammelt besonders schnell abgeladen und gestapelt werden können.

Alternativ zur mechanischen Schaltwalze 20 kann die Sensoreinrichtung 5 auch eine Lichtschranke aufweisen, die in gleicher Richtung wie die Schaltwalze 20 verläuft und durch die Kippbewegung 27 des Gegenstandes 7 ausgelöst werden kann.

Figur 5 zeigt eine alternative Ausführungsform der Sensoreinrichtung 5, die eine Kamera 29 aufweist, die mit der Steuerung 17 verbunden ist und welche die Kippbewegung 27 des Gegenstandes 7 erkennt und die Sensoreinrichtung 5 auslöst.

Figur 6 zeigt eine weitere alternative Ausführungsform der erfindungsgemäßen Sensoreinrichtung 5, die in der Kante 26 des Abladekopfes 3 integriert ist. Dabei bildet die Druckwalze 20, die hier als Druckbalken ausgebildet ist, die Kante 26 des Abladekopfes 3 aus. Durch die Kippbewegung 27 des Gegenstandes 7 wird die Druckwalze 20 nach unten bewegt und aktiviert den Druckschalter 19, der im Innern des Abladekopfes 3 angeordnet ist.

Zusätzlich kann die Sensoreinrichtung 5, wie in Figur 2 dargestellt, auch seitlich am Abladekopf 3 angeordnet sein, so dass der Bediener 8 schwere Gegenstände 7 auch seitlich vom Abladekopf 3 abladen kann.

Um den Beladevorgang insgesamt zu beschleunigen, verfährt die Steuerung 17 den Abladekopf 3 automatisch von der in Figur 3 dargestellten niedrigen Stellung in die in Figur 1 dargestellte hohe Stellung, nachdem der Bediener einen schweren Gegenstand 7 in der niedrigen Stellung vom Abladekopf 3 abgeladen hat und die Sensoreinrichtung 5 nicht mehr aktiviert ist.

Durch die erfindungsgemäße Vorrichtung 1 wird für leichte Gegenstände eine schnelle und eher konventionelle Beladung ermöglicht und für schwere Gegenstände ein schnelles Absenken des Abladekopfes 3 auf die niedrige Stellung, die etwa in Kniehöhe des Bedieners 8 ist, ermöglicht. So wird die Hubarbeit bei schweren Gegenständen 7 für den Bediener 8 reduziert oder ganz überflüssig. Ferner können Beschädigungen von schweren Gegenständen 7 durch Herunterstürzen vermieden werden, die beispielsweise bei Vorrichtungen aus dem Stand der Technik auftreten können, die nicht absenken. Die erfindungsgemäße Vorrichtung 1 ermöglicht eine körperliche Entlastung des Bedieners 8 bei schweren Gegenständen, was insgesamt zu einer erheblichen Durchsatzsteigerung führt.

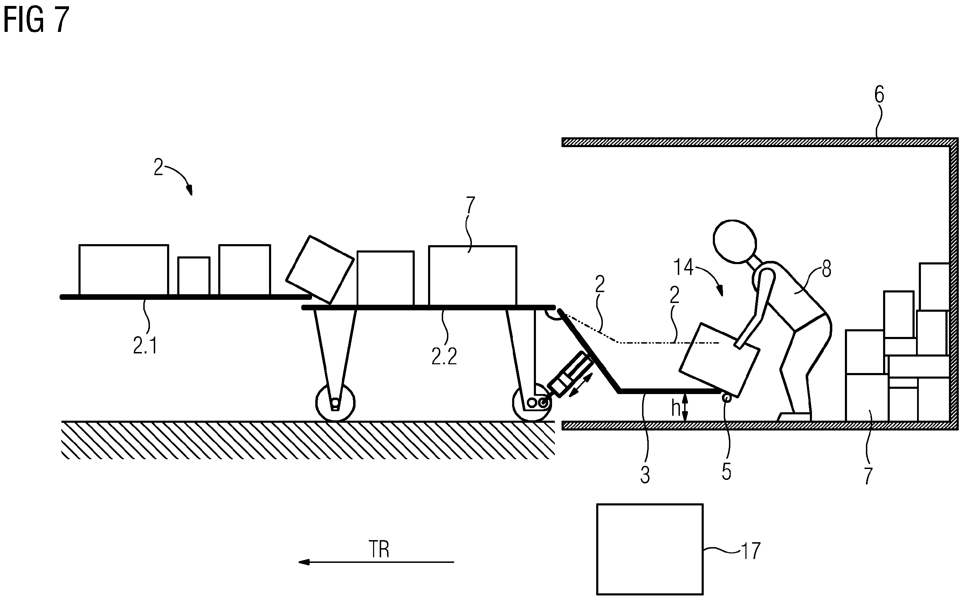

Schließlich zeigt Figur. 7 noch eine weitere Ausführungsform der erfindungsgemäßen Vorrichtung 1. Der Kürze halber wird lediglich auf die Unterschiede zur Ausführungsform der Figuren 1 bis 4 eingegangen.

Bei der Ausführungsform der Figur 7 weist die Vorrichtung 1 Z-förmig eine Anordnung aus Transportmitteln 2 und Abladekopf 3 auf, bei der der Abladekopf 3 unabhängig von der Höhe h gleich ausgerichtet ist. So ist der Abladekopf in Figur 7 immer waagerecht angeordnet. Sowohl in der unteren Stellung als auch in der gestrichelt gezeichneten oberen Stellung.

## Patentansprüche

1. Vorrichtung (1) zum Handhaben von Gegenständen (7), mit einem Abladekopf (3), auf den die Gegenstände (7) transportierbar und von dem die Gegenstände (7) von einem Bediener (8) abladbar sind, einem mit dem Abladekopf (3) verbundenen Hubmittel (4), mittels dem die Höhe (h) des Abladekopfes (3) einstellbar ist, und einer auslösbaren Sensoreinrichtung (5), durch die das Hubmittel (4) aktivierbar ist,
**dadurch gekennzeichnet, dass** die Sensoreinrichtung (5) so angeordnet ist, dass sie von dem Bediener (8) mittels eines auf dem Abladekopf (3) befindlichen Gegenstandes (7) auslösbar ist.

2. Vorrichtung (1) nach Anspruch 1,
**gekennzeichnet durch**
ein mit dem Abladekopf (3) verbundenes Transportmittel (2), durch das die Gegenstände (7) in einer Transportrichtung (TR) zum Abladekopf (3) bewegbar sind.

3. Vorrichtung (1) nach Anspruch 2,
**dadurch gekennzeichnet, dass** die Vorrichtung (1) zum Beladen der Gegenstände (7) in einen Transportbehälter (6) ausgebildet ist und der Abladekopf (3) in der Transportrichtung (TR) an das Transportmittel (2) anschließend angeordnet ist.

4. Vorrichtung (1) nach einem der oben genannten Ansprüche,
**dadurch gekennzeichnet, dass** die Sensoreinrichtung (5) in Transportrichtung (TR) hinter dem Abladekopf (3) und/oder quer zur Transportrichtung (TR) seitlich vom Abladekopf (3) angeordnet ist.

5. Vorrichtung (1) nach einem der oben genannten Ansprüche,
**dadurch gekennzeichnet, dass** die Sensoreinrichtung (5) als eine Kamera (29) oder Lichtschranke ausgebildet ist.

6. Vorrichtung (1) nach einem der oben genannten Ansprüche 1 bis 4,
**dadurch gekennzeichnet, dass** die Sensoreinrichtung (5) als ein Schalter (19) ausgebildet ist.

7. Vorrichtung (1) nach einem der oben genannten Ansprüche,
**dadurch gekennzeichnet, dass** der Abladekopf (3) eine Auflageebene (18) für die Gegenstände (7) definiert und die Sensoreinrichtung (3) in gleicher Höhe oder unterhalb der Auflageebene (18) angeordnet ist.

8. Vorrichtung (1) nach einem der oben genannten Ansprüche 6 oder 7,
**dadurch gekennzeichnet, dass** die Sensoreinrichtung (5) so ausgebildet ist, dass sie mittels einer auf sie wirkenden Betätigungskraft (F) auslösbar ist.

9. Vorrichtung (1) nach einem der oben genannten Ansprüche,
**dadurch gekennzeichnet, dass** der Abladekopf (3) eine Auflageebene (18) für die Gegenstände (7) definiert und eine Kante (26) aufweist, welche die Auflageebene (18) in Transportrichtung (TR) und/oder quer zur Transportrichtung (TR) begrenzt, und die Sensoreinrichtung (5) in zumindest einem Teil der Kante (26) integriert ist oder zumindest einen Teil der Kante (26) ausbildet.

10. Vorrichtung (1) nach einem der oben genannten Ansprüche,
**gekennzeichnet durch**
eine Vereinzelungseinrichtung (21), welche die Gegenstände (7) in der Transportrichtung (TR) vereinzelt.

11. Vorrichtung (1) nach einem der oben genannten Ansprüche,
**gekennzeichnet durch**
eine Waage (22), die zur Gewichtsmessung der Gegenstände (7) ausgebildet ist, und durch ein Signalmittel (23), das zum Abgeben eines für den Bediener (8) wahrnehmbaren Signals für jeden Gegenstand, dessen von der Waage gemessenes Gewicht oberhalb eines vorbestimmten Grenzwertes liegt, ausgestaltet ist.

12. Vorrichtung (1) nach einem der oben genannten Ansprüche,
**gekennzeichnet durch**
eine Steuerung (17), die mit der Sensoreinrichtung (5) und dem Hubmittel (4) signaltechnisch verbunden ist, und die bei Auslösung der Sensoreinrichtung (5) zum automatischen Verfahren des Abladekopfes (3) von einer hohen Stellung in eine niedrige Stellung ausgebildet ist.

13. Vorrichtung (1) nach Anspruch 12,
**dadurch gekennzeichnet, dass** die Steuerung (17) ausgebildet ist, nach Auslösung der Sensoreinrichtung (5) den Abladekopf (3) von der niedrigen Stellung zurück in die hohe Stellung zu verfahren.

14. Vorrichtung (1) nach einem der oben genannten Ansprüche,
**gekennzeichnet durch**
einen am Abladekopf (3) angeordneten Speicherbereich (25), der zum Zwischenlagern von mehreren Gegenständen (7) ausgebildet ist.

15. Verfahren zum Handhaben von Gegenständen (7), bei dem die Gegenstände (7) von einem Bediener (8) von einem Abladekopf (3) abgeladen werden, eine Sensoreinrichtung (5) ausgelöst und dadurch der Abladekopf (3) durch ein Hubmittel (4) höhenverstellt wird,
**dadurch gekennzeichnet, dass** die Sensoreinrichtung (5) vom Bediener (8) mittels eines auf dem Abladekopf (3) befindlichen Gegenstandes (7) ausgelöst wird.

## Claims

1. Device (1) for handling objects (7), having an unloading head (3), on which the objects (7) can be transported and from which the objects (7) can be unloaded by an operator (8), a lifting means (4) connected to the unloading head (3), by means of which the height (h) of the unloading head (3) can be adjusted, and a triggerable sensor apparatus (5), by means of which the lifting means (4) can be activated,
**characterised in that**
the sensor apparatus (5) is arranged such that it can be triggered by the operator (8) by means of an object (7) disposed on the unloading head (3).

2. Device (1) according to claim 1,
**characterised by**
a means of transport (2) connected to the unloading head (3), by means of which the objects (7) can be moved in a transport direction (TR) toward the unloading head (3).

3. Device (1) according to claim 2,
**characterised in that**
the device (1) for loading the objects (7) is embodied in a transport container (6) and the unloading head (3) is arranged attached to the means of transport (2) in the transport direction (TR).

4. Device (1) according to one of the afore-cited claims,
**characterised in that**
the sensor apparatus (5) is arranged behind the unloading head (3) in the transport direction (TR) and/or to the side of the unloading head (3) transverse to the transport direction (TR).

5. Device (1) according to one of the afore-cited claims,
**characterised in that**
the sensor apparatus (5) is embodied as a camera (29) or a light beam system.

6. Device (1) according to one of the afore-cited claims 1 to 4,
**characterised in that**
the sensor apparatus (5) is embodied as a switch (19).

7. Device (1) according to one of the afore-cited claims,
**characterised in that**
the unloading head (3) defines a support plane (18) for the objects (7) and the sensor apparatus (3) is arranged at the same height as or below the support plane (18).

8. Device (1) according to one of the afore-cited claims 6 or 7,
**characterised in that**
the sensor apparatus (5) is embodied such that it can be triggered by means of an actuation force (F) acting on it.

9. Device (1) according to one of the afore-cited claims,
**characterised in that**
the unloading head (3) defines a support plane (18) for the objects (7) and has an edge (26), which delimits the support plane (18) in the transport direction (TR) and/or transverse to the transport direction (TR), and the sensor apparatus (5) is integrated in at least one part of the edge or embodies at least one part of the edge (26).

10. Device (1) according to one of the afore-cited claims,
**characterised by**
a separating apparatus (21), which separates the objects (7) in the transport direction (TR).

11. Device (1) according to one of the afore-cited claims,
**characterised by**
a balance (22), which is embodied to measure the weight of the objects (7), and by a signalling means (23), which is embodied to output a signal for each object which can be perceived by the operator (8), the weight of which measured by the balance lies above a predetermined limit value.

12. Device (1) according to one of the afore-cited claims,
**characterised by**
a controller (17), which is connected to the sensor apparatus (5) and the lifting means (4) for signalling purposes, and which is embodied to automatically move the unloading head (3) from a high position to a low position when the sensor apparatus (5) is triggered.

13. Device (1) according to claim 12,
**characterised in that**
the controller (17) is embodied, after triggering the sensor apparatus (5), to move the unloading head (3) from the low position back into the high position.

14. Device (1) according to one of the afore-cited claims,
**characterised by**
a storage area (25) arranged on the unloading head (3), which is embodied for the temporary storage of a number of objects (7).

15. Method for handling objects (7), in which the objects (7) are unloaded from an unloading head (3) by an operator (8), a sensor apparatus (5) is triggered and as a result the unloading head (3) is height-adjusted by means of a lifting means (4),
**characterised in that**
the sensor apparatus (5) is triggered by the operator (8) by means of an object (7) disposed on the unloading head (3).

## Revendications

1. Dispositif (1) destiné à la manipulation d'objets (7), avec une tête de déchargement (3), sur laquelle les objets (7) peuvent être transportés et de laquelle les objets (7) peuvent être déchargés par un technicien (8), un moyen de levage (4) relié à la tête de déchargement (3), au moyen duquel la hauteur (h) de la tête de déchargement (3) peut être ajustée, et un système de détection (5) pouvant être déclenché, par le biais duquel le moyen de levage (4) peut être activé, **caractérisé en ce que** le système de détection (5) est disposé de sorte qu'il peut être déclenché par le technicien (8) au moyen d'un objet (7) qui se trouve sur la tête de déchargement (3).

2. Dispositif (1) selon la revendication 1, **caractérisé par** un moyen de transport (2) relié à la tête de déchargement (3) par le biais duquel les objets (7) peuvent être déplacés dans une direction de transport (TR) vers la tête de déchargement (3).

3. Dispositif (1) selon la revendication 2, **caractérisé en ce que** le dispositif (1) est configuré pour le chargement des objets (7) dans un récipient de transport (6) et la tête de déchargement (3) est ensuite disposée dans la direction de transport (TR) au niveau du moyen de transport (2).

4. Dispositif (1) selon l'une des revendications précédentes, **caractérisé en ce que** le système de détection (5) est disposé dans la direction de transport (TR) derrière la tête de déchargement (3) et/ou transversalement à la direction de transport (TR) latéralement par rapport à la tête de déchargement (3).

5. Dispositif (1) selon l'une des revendications précédentes, **caractérisé en ce que** le système de détection (5) est configuré en tant que caméra (29) ou barrière lumineuse.

6. Dispositif (1) selon l'une des revendications précédentes 1 à 4, **caractérisé en ce que** le système de détection (5) est configuré en tant que commutateur (19).

7. Dispositif (1) selon l'une des revendications précédentes, **caractérisé en ce que** la tête de déchargement (3) définit un plan d'appui (19) pour les objets (7) et le système de détection (5) est disposé à la même hauteur que le plan d'appui (18) ou en dessous de celui-ci.

8. Dispositif (1) selon l'une des revendications précédentes 6 ou 7, **caractérisé en ce que** le système de détection (5) est configuré de sorte qu'il peut être déclenché au moyen d'une force d'actionnement (F) agissant sur celui-ci.

9. Dispositif (1) selon l'une des revendications précédentes, **caractérisé en ce que** la tête de déchargement (3) définit un plan d'appui (18) pour les objets (7) et présente une arête (26), qui délimite le plan d'appui (18) dans la direction de transport (TR) et/ou transversalement à la direction de transport (TR), et le système de détection (5) est intégré dans au moins une partie de l'arête (26) ou configure au moins une partie de l'arête (26).

10. Dispositif (1) selon l'une des revendications précédentes, **caractérisé par** un système de séparation (21) qui sépare les objets (7) dans la direction de transport (TR).

11. Dispositif (1) selon l'une des revendications précédentes, **caractérisé par** une balance (22), qui est configurée pour la mesure du poids des objets (7), et par un moyen de signal (23), qui est conçu pour émettre un signal perceptible pour le technicien (8) pour chaque objet, dont le poids mesuré par la balance se situe au-dessus d'une valeur seuil prédéterminée.

12. Dispositif (1) selon l'une des revendications précédentes, **caractérisé par** une commande (17) qui est reliée au système de détection (5) et au moyen de levage (4) par la technique des signaux et qui, lors du déclenchement du système de détection (5), est configurée pour manoeuvrer automatiquement la tête de décharge (3) d'une position haute à une position basse.

13. Dispositif (1) selon la revendication 12, **caractérisé en ce que** la commande (17) est configurée, après le déclenchement du système de détection (5), pour manoeuvrer la tête de déchargement (3) et la faire repasser de la position basse à la position haute.

14. Dispositif (1) selon l'une des revendications précédentes, **caractérisé par** une zone de stockage (25) disposée au niveau de la tête de déchargement (3) et qui est configurée pour l'entreposage de plusieurs objets (7).

15. Procédé destiné à la manipulation d'objets (7), dans lequel les objets (7) sont déchargés d'une tête de déchargement (3) par un technicien (8), un système de détection (5) est déclenché et de ce fait la tête de déchargement (3) est réglée en hauteur par le biais d'un moyen de levage (4), **caractérisé en ce que** le système de détection (5) est déclenché par le technicien (8) au moyen d'un objet (7) qui se trouve sur la tête de déchargement (3).
